Europäisches Patentamt

European Patent Office

Office européen des brevets

(11) Veröffentlichungsnummer: **0 204 753 B1**

(12) **EUROPÄISCHE PATENTSCHRIFT**
veröffentlicht nach Art. 158 Abs. 3
EPÜ

(45) Veröffentlichungstag der Patentschrift: **24.04.91**

(21) Anmeldenummer: **85906027.9**

(22) Anmeldetag: **05.12.85**

(86) Internationale Anmeldenummer:
**PCT/AT85/00054**

(87) Internationale Veröffentlichungsnummer:
**WO 86/03440 (19.06.86 86/13)**

(51) Int. Cl.⁵: **B23D 21/14, //B26D7/14**

(54) **VERFAHREN UND VORRICHTUNG ZUM ABTRENNEN VON ROHRSTÜCKEN.**

(30) Priorität: **07.12.84 AT 3899/84**

(43) Veröffentlichungstag der Anmeldung:
**17.12.86 Patentblatt 86/51**

(45) Bekanntmachung des Hinweises auf die
Patenterteilung:
**24.04.91 Patentblatt 91/17**

(84) Benannte Vertragsstaaten:
**AT BE CH DE FR GB IT LI LU NL SE**

(56) Entgegenhaltungen:
**CH-A- 422 692**
**DE-A- 1 932 122**
**FR-A- 2 234 954**
**US-A- 2 323 546**
**US-A- 4 470 330**

**See also references of WO8603440**

(73) Patentinhaber: **BALINT, Ludwig**
**Bregenzer Strasse 37**
**A-6911 Lochau(AT)**

(72) Erfinder: **BALINT, Ludwig**
**Bregenzer Strasse 37**
**A-6911 Lochau(AT)**

(74) Vertreter: **Kliment, Peter, Dipl.-Ing. Mag.-jur.**
**Singerstrasse 8**
**A-1010 Wien(AT)**

**Beschreibung**

Die Erfindung bezieht sich auf eine Einrichtung zum Abtrennen von Rohrstücken mit geschlossenen, das Rohr umgebenden Messern und einem Anschlag, wobei mindestens ein Messer um eine vom Mittelpunkt seines Durchbruchs in der Schnittebene distanzierte Drehachse gegenüber dem zweiten Messer verdrehbar ist, und die Messer plan aneinander anliegen und in der Halterung des einen Messers ein mittels eines Antriebes, vorzugsweise einer Zylinder-Kolbenanordnung axial zu den Messern verschiebbarer Dorn geführt ist, dessen Querschnitt mit dem lichten Querschnitt des zu schneidenden Rohres einen Preßsitz ergibt, wobei der Dorn geteilt ist und die Teilungsebene seiner beiden stumpf aneinander anliegenden Teile im eingeschobenen Zustand in der Schnittebene der beiden Messer liegt.

Eine solche Einrichtung ist z.B. in der Zeitschrift "Soviet Inventions Illustrated" (& SU-A 774 829) beschrieben, bei der zwar ein teilbarer ein Aufweiten des zu trennenden Rohres bewirkender Dorn vorgesehen ist, der das Material des Rohres zwingt entlang den Innenwänden der geschlossenen Messer zu fließen, doch ist dieser teilbare Dorn im Bereich seiner beiden aneinander anliegenden Stirnseiten, sehr stark abgefast, z.B. mit konischen Übergängen von den Stirn- zu den Mantelflächen versehen, sodaß es zu einer völligen Entlastung des radialen Spannungszustandes des Materials des Rohres nach dessen Aufweitung im Bereich der Trennebene kommt.

Dadurch ergibt sich jedoch der Nachteil, daß es beim Abtrennen von Rohrstücken zu einem Abscheren der Stücke kommt, wodurch ein Ausreißen von Metallpartikel aus den Trennflächen nicht zu vermeiden ist.

Ziel der Erfindung ist es diesen Nachteil zu vermeiden und eine Einrichtung der eingangs erwähnten Art vorzuschlagen, mit der sehr saubere und glatte Trennflächen erzielt werden können und mit der Stücke mit hoher Konstanz in Bezug auf deren Volumina von einem Rohr abgetrennt werden können.

Erfindungsgemäß wird dies dadurch erreicht, daß beide Messer einen Innendurchmesser aufweisen, der mit dem Durchmesser des zu schneidenden Rohres einen Preßsitz ergibt, und daß die einander zugekehrten Stirnseiten der beiden Teile des Dornes scharfkantig in deren Mantelfläche übergehen und in diesem Übergangsbereich einen Querschnitt aufweisen, der mit dem lichten Querschnitt des zu trennenden Rohres einen strengen Preßsitz ergibt und eine eine erhebliche Druckkraft während der gegenseitigen Bewegung der Messer aufbringende vorzugsweise mit einer Zylinder-Kolbenanordnung versehene Vorschubeinrichtung vorgesehen ist. Durch diese Maßnahmen wird sichergestellt, daß das Material im Bereich der Schnittebene in einem allseitigen Spannungszustand gehalten wird, wobei in radialer Richtung die Spannung im Material zumindest 70% seiner Streckgrenze beträgt. Wird mittels der Vorschubeinrichtung in axialer Richtung des zu zerteilenden Rohres ebenfalls eine Spannung im Rohr im Bereich von zumindest 70%, vorzugsweise von 100% der Streckgrenze des Materials sichergestellt, so kommt es beim Abtrennen eines Rohrstückes zu einem Fließen des Materials im Bereich der Trennebene, wodurch sich sehr glatte Trennflächen ergeben. Außerdem ist durch das Aufpressen des Rohres auf den geteilten Dorn und das Anpressen des Rohres an den Anschlag eine hohe Volumskonstanz der abgetrennten Rohrstücke gewährleistet.

Beim Abtrennen mehrerer Stücke von einem Rohr verbleibt der eine Teil des Dornes in dem Rohr, von dem die Stücke abgetrennt werden und gelangt beim Nachschieben des Rohres gegen den Anschlag zu wieder in Kontakt mit dem in der Halterung gehaltenen Teil des Dornes, wonach ein weiteres Stück vom Rohr abgetrennt werden kann.

Bei einer solchen Einrichtung kann weiters vorgesehen sein, daß die, das eine von der Vorschubeinrichtung für das zu trennende Rohr abgekehrte Messer und den Dorn aufnehmende Halterung an einem exzentrisch zur Bohrung des zweiten Messers angeordneten Zapfen drehbar gelagert und mittels eines Antriebes gegenüber diesen verdrehbar ist, wodurch sich eine sehr einfache Konstruktion ergibt.

Um einerseits das Auswerfen des abgetrennten Rohrstückes aus den Messern und andererseits die exakte Lage der beiden Teile des Dornes sicherzustellen, kann vorgesehen sein, daß der geteilte Dorn eine Hülse durchsetzt, die auf diesem Dorn verschiebbar ist und deren eine Stirnseite den Anschlag für das zu trennende Rohr bildet und die eine an einem Anschlag des Dornes zur Anlage bringbare Schulter aufweist, die bei einer Bewegung des Dornes zum Messer hin zur Anlage an dem Anschlag kommt. Damit ist sichergestellt, daß der eine Teil des Dornes um stets das gleiche Maß gegenüber der dem Rohr zugekehrten Stirnfläche der Hülse vorspringt und so die exakte Lage der Trennfläche des Dornes sichergestellt wird.

Nach einer weiteren Variante der Erfindung kann bei einer Einrichtung der eingangs erwähnten Art vorgesehen sein, daß die einander zugekehrten Stirnseiten der beiden Teile des Dornes scharfkantig in deren Mantelfläche übergehen und in diesem Übergangsbereich einen Durchmesser aufweisen, der den lichten Querschnitt des zu trennenden Rohres übersteigt und eine eine erhebliche Druckkraft während der gegenseitigen Bewegung der Messer aufbringende, vorzugsweise mit einer Zylinder-Kolbenanordnung versehene Vorschubeinrichtung vorgesehen ist, wobei in den das Rohr umschließenden Zylinderflächen der Messer, in den Mantelflächen der beiden Teile des Dornes, sowie in einer der beiden einander zugekehrten Stirnflächen der beiden Messer Abdichtungen angeordnet sind und in einem der Messer ein mit Drucköl beaufschlagbarer Ölkanal angeordnet ist, der zum Inneren des Messers zu offen ist und eine zu der dem zweiten Messer zugekehrten Stirnfläche hin offene Abzweigung aufweist.

Durch diese Maßnahmen ist es möglich, durch Wahl einer entsprechenden Druckbeaufschlagung des Drucköls die Spannung in dem zu trennenden Rohr im Bereich der Trennebene einzustellen. Gleichzeitig wird auch das Vorschieben des Rohres zum Abtrennen weiterer Stücke erleichtert, da dabei nicht die gesamte Spannung im Rohr aufgebaut zu werden braucht.

Nach einem weiteren Merkmal der Erfindung kann vorgesehen sein, daß die Vorschubeinrichtung für das zu trennende Rohr eine mit der hohl ausgebildeten Kolbenstange der Zylinder-Kolbenanordnung gekuppelte Spannzange aufweist, die zwischen zwei Druckrädern angeordnet ist, von denen vorzugsweise eines mit einer umlaufenden Rille versehen ist und die um zwei zueinander parallel verlaufende, die Spannzange senkrecht kreuzende Achsen drehbar sind und von denen mindestens eine senkrecht zur Spannzange bewegbar ist, wodurch auf eine in konstruktiver Hinsicht sehr einfache Weise die Verwendung auch sehr langer Rohr möglich wird, so daß entsprechend wenige, nicht mehr weiter trennbare Reste anfallen. Dabei wird durch die beiden Druckräder in Verbindung mit der Spannzange die für das Einschieben des Rohres in die Messer nötige Klemmung erreicht.

Um auch relativ kurze Rohrstücke zerteilen und so eine sehr hohe Materialausnutzung erzielen zu könnne, kann nach einem weiteren Merkmal der Erfindung vorgesehen sein, daß die Vorschubrichtung für zu unterteilende Rohrstücke eine hohlzylindrische Führung aufweist, die eine sich über einen Teil ihrer Länge erstreckende nach oben zu offene Ausnehmung aufweist und bei der die unterste Erzeugende ihrer Innenwand mit der untersten Erzeugenden der Bohrungen der Messer übereinstimmt und in die ein von einer Zylinder-Kolbenanordnung betätigter Stempel hineinragt. Auf diese Weise können auch noch relativ kurze Rohrstücke stumpf aneinanderliegend in die Messer eingeschoben und getrennt werden.

Die Erfindung wird nun an hand der Zeichnung näher erläutert. Dabei zeigt:

Fig. 1 einen Schnitt durch eine erste Ausführungsform einer erfindungsgemäßen Einrichtung;

Fig. 2 eine Draufsicht auf die Einrichtung gemäß Fig. 1;

Fig. 3 einen Querschnitt durch die Einrichtung gemäß Fig. 1;

Fig. 4 eine Draufsicht auf eine andere Ausführungsform der Erfindung;

Fig. 5 einen Längsschnitt durch die Einrichtung gemäß Fig. 4;

Fig. 6 einen Querschnitt der Einrichtung gemäß Fig. 4 und

Fig. 7 schematisch ein weiteres Detail der Messeranordnung.

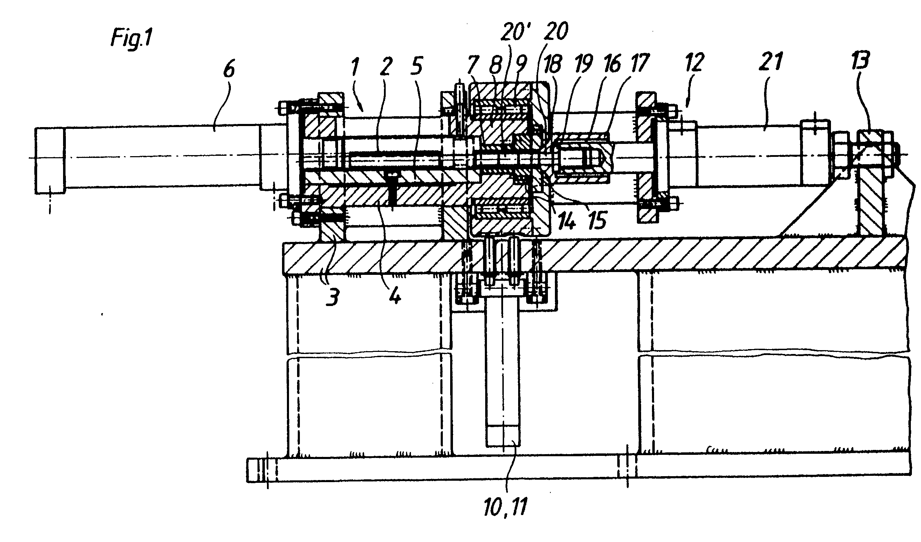

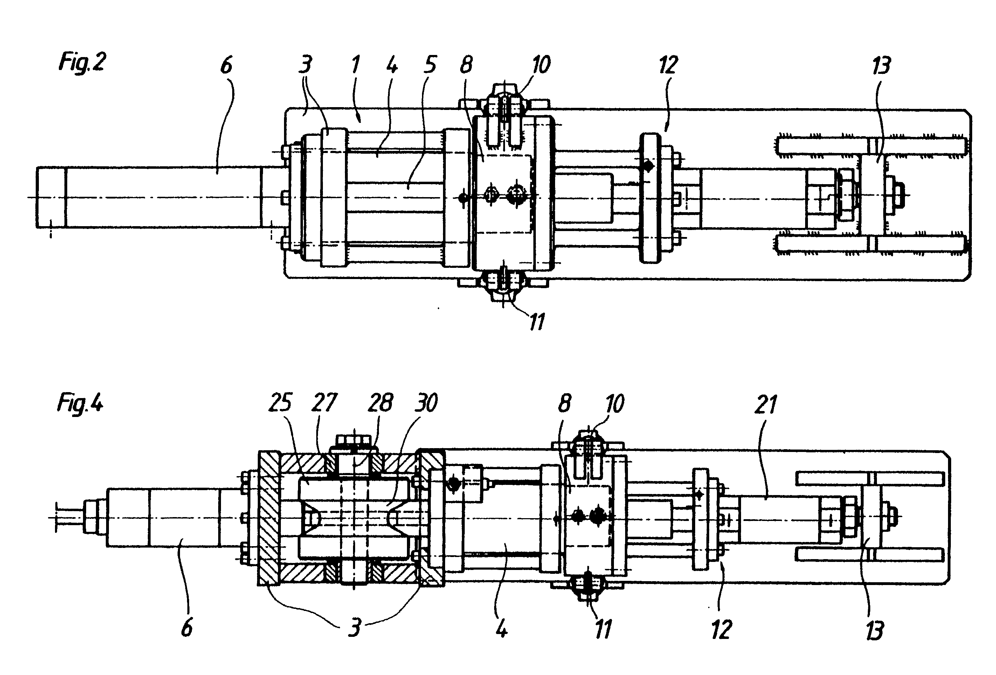

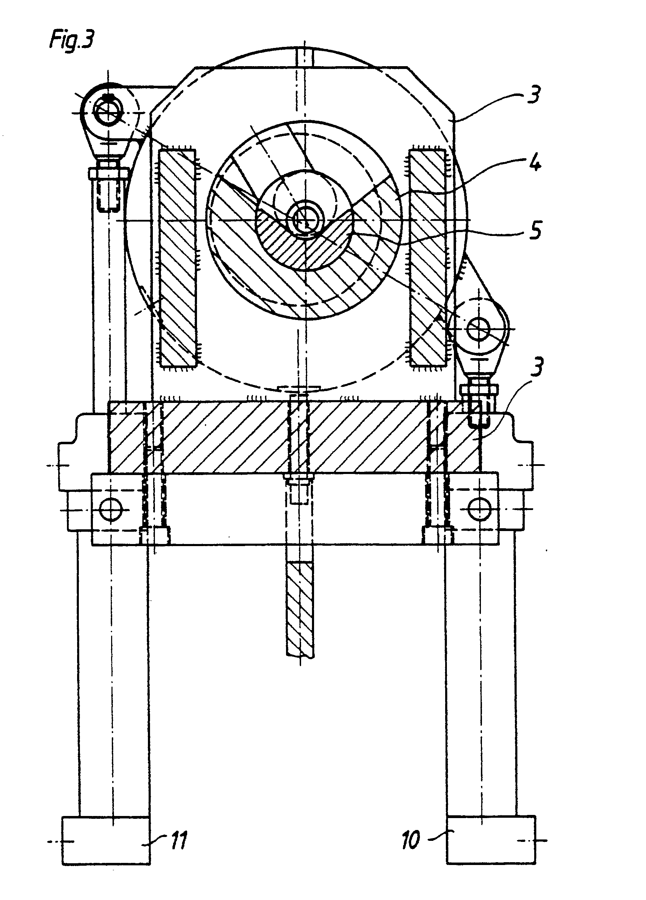

Bei der Ausführungsform gemäß Fig. 1 bis 3, die für die Aufarbeitung von relativ kurzen Rohrstücken vorgesehen ist, ist eine Aufnahme 1 für die Aufnahme der Rohrstücke 2 in einem Gestell 3 voegesehen. Diese Aufnahme besteht aus einem Träger 4 und einer in diesem auswechselbar befestigten Führung 5.

Der Träger 4 ist im Gestell 3 befestigt und mit einer Zylinder-Kolbenanordnung 6 verbunden, deren Kolbenstange in die Führung 5 hineinragt, die über den größten Teil ihrer Länge oben offen ist, um die Zufuhr der Rohrstücke 2 zu ermöglichen. In dem Träger ist weiters eine Führungshülse 7 gehalten, wobei die untersten Mantellinien der Führung 5 und der Bohrung der Führungshülse 7 in einer Linie liegen.

Der Träger 4 weist an seinem von der Zylinder-Kolbeneinheit 6 abgekehrten Ende einen seitlich versetzten Zapfen 8 auf. An diesem ist über ein Lager 9 ein über Zylinder-Kolbenanordnungen 10, 11 verdrehbarer Stützteil 12 abgestützt, der weiters in einer Konsole 13 abgestützt ist, wobei die Drehachse des Stützteiles 12 koaxial zur Achse des Zapfens 8 verläuft.

An der freien Stirnseite des Zapfens 8 ist ein Messer 14 eingesetzt, dessen Bohrung derart dimensioniert ist, daß sich mit dem Außendurchmesser der Rohrstücke 2 ein Preßsitz ergibt, durch den die Rohrstücke 2 im Bereich der vorgesehenen Trennstelle im wesentlichen bis zur Streckgrenze belastet sind. Dabei verläuft die unterste Mantellinie der Bohrung des Messers 14 koaxial zu den untersten Mantellinien der Führung und der Führungshülse 7.

In der dem Messer 14 zugekehrten Stirnseite des Stützteiles 12 ist ein weiteres Messer 15 eingesetzt, dessen Bohrung ebenfalls derart bemessen ist, daß es zu einem Preßsitz mit den Rohrstücken 2 kommt.

In dem Stützteil 12 ist in einer Bohrung 16 eine Hülse 17 verschiebbar, dessen eine Stirnseite als Anschlag für die Rohrstücke 2 dient. Diese Hülse 17 weist an ihrer Innenseite eine Schulter 18 auf, an der ein Anschlag 19 eines Dornes 20 zur Anlage bringbar ist. Dieser Dorn 20 ist in die Stirnseite einer Kolbenstange einer Zylinder-Kolbenanordnung 21 angeschraubt, die Teil des Stützteiles 12 ist.

Der Dorn 20 selbst ist zweigeteilt, wobei der eine Teil in die Kolbenstange eingeschraubt ist und im eingeschobenen Zustand bis zur Trennebene der beiden Messer 14,15 reicht. Der zweite Teil 20' des Dornes schließt stumpf an den Dorn 20 an.

Der Dorn 20,20' weist abgesehen von einem Auflaufbereich, einen Durchmesser auf, der mit dem Innendurchmesser der Rohrstücke 2 einen Preßsitz ergibt, durch den die Rohrstücke im wesentlichen bis zu deren Streckgrenz belastet werden.

Das Abtrennen von Stücken von den Rohrstücken 2 erfolgt in der Weise, daß ein Rohrstück 2 in die Führung 5 eingelegt und durch die Zylinder-Kolbenanordnung 6 gegen die Messer 14,15 vorgeschoben und in diese eingepreßt wird, wobei die Rohrstücke zumindest bis nahe an ihre Streckgrenze belastet werden.

Danach wird der Dorn 20 in das Rohrstück 2 eingepreßt, wobei die Hülse 17 mitgenommen wird, bis diese an einem Ansatz des Stützteiles 12 anschlägt, wobei gleichzeitig die Lage des Rohrstückes 2 festgelegt wird und der Dorn 20,20' mit seinen ebenen Trennflächen exakt in der Trennebene der beiden Messer 14,15 liegt.

Danach wird der Stützteil 12 durch die beiden Zylinder-Kolbenanordnungen 10,11 verdreht, wodurch es zu einer gegenseitigen Verschiebung der beiden Messer kommt, was durch die Halterung des Messers 14 koaxial zur Führung 5 und der Zylinder-Kolbenanordnung 6 und damit exentrisch zum Zapfen 8 bzw. durch die gegeneinander verschobene Lage der Drehachsen der Messer 14 und 15 bedingt ist. Durch diese Verschiebung der Messer 14,15 kommt es aufgrund des Spannungszustandes der Rohrstücke 2 im Bereich der Trennebene der Messer bzw. des Dornes zu einem glatten Fließen des Materials im Bereich der Trennebene, wodurch sich sehr glatte und praktisch ebene Trennflächen ergeben.

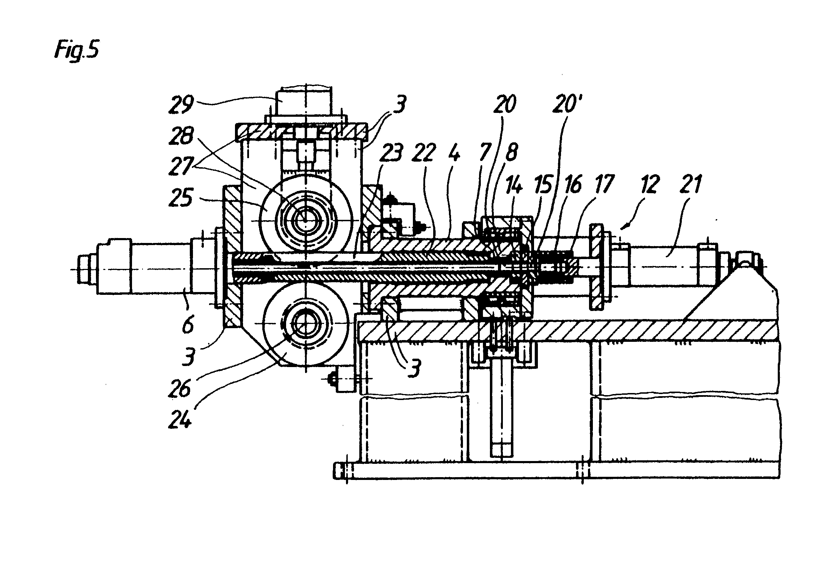

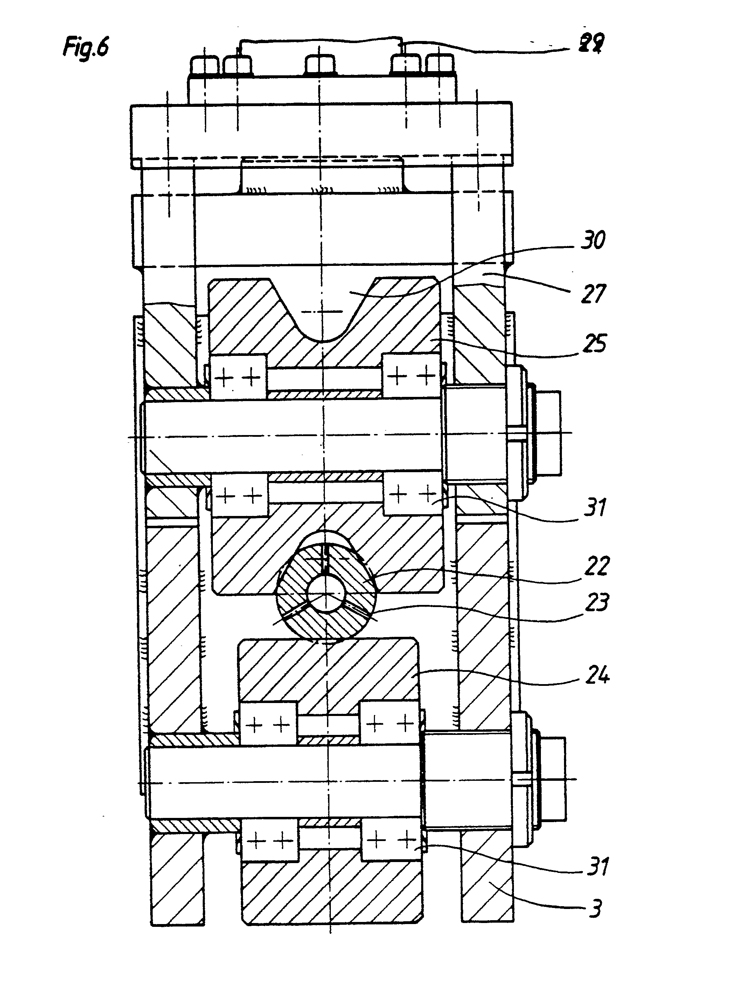

Die Ausführungsform gemäß Fig. 4 bis 6 unterscheidet sich von der gemäß Fig. 1 bis 3 dadurch, daß statt der Aufnahme 1 eine Spannzange 22 vorgesehen ist, die mit der hohlen Kolbenstange der Zylinder-Kolbenanordnung 6 gekuppelt ist, die an dem Gestell 3 befestigt ist. Die Spannzange 22 ist in einer Bohrung des Trägers 4 geführt, der auch die Führungshülse 7 aufnimmt. Weiters nimmt der Träger das Messer 14 auf und stützt mittels eines Zapfens 8 und des Lagers 9 den Stützteil 12 ab, der gleich jenem gemäß den Fig. 1 bis 3 ausgebildet ist.

Die Klemmung zwischen dem Rohr 2' und der Spannzange 22, die in dem der Zylinder-Kolbenanordnung 6 zugekehrten Bereich Schlitze 23 aufweist und in ihrem anderen Endbereich als ungeschlitzte Hülse ausgebildet ist, wird durch zwei Druckräder 24,25 erreicht, von denen das Druckrad 24 mittels einer im Gestell 3 gehaltenen Achse 26 ortsfest, aber drehbar gehalten ist und auf dem die Spannzange 22 aufliegt.

Das zweite Druckrad 25 ist in einer im Gestell 3 vertikal verschiebbaren Halterung 27 mittels einer Achse 28 drehbar und vertikal verschiebbar gehalten. Dabei ist diese Halterung 27 mittels einer am Gestell 3 abgestützten Zylinder-Kolbenanordnung 29 verschiebbar, sodaß das mit der der Querschnittsform der Spannzange weitgehend umlaufenden Rille 30 versehene Druckrad 25 gegen die Spannzange 22 preßbar ist.

Die beiden Durckräder 24,25 sind über Lager 31 von den entsprechenden Achsen 26,28 abgestützt.

Die Arbeitsweise der Einrichtung gemäß den Fig. 4 bis 6 unterscheidet sich von jener gemäß Fig. 1 bis 3 nur dadurch, daß vor dem Zurückziehen der Kolbenstange der Zylinder-Kolbenanordnung 6, die in Fig. 5 in ihrer vordersten Lage dargestellt ist, das Druckrad 25 durch entsprechende Ansteuerung der Zylinder-Kolbenanordnung 29 von der Spannzange 22 etwas abgehoben wird. Das Rohr 2' das im hülsenförmigen Teil der Spannzange 22 mit nur sehr geringem Spiel geführt ist, wird durch das Messer 14, das in dem gegenüber der Achse der Spannzange 22 versetzten Zapfen 8 des Trägers koaxial zur Spannzange 22 gehalten ist, aufgrund des strengen Preßsitzes des Rohres 2' in der Bohrung des Messers 14 sicher gehalten, sodaß das Rohr beim Zurückziehen der Spannzange nicht von dieser mitgenommen werden kann.

Vor dem Vorschieben des Rohres gegen die Messer 14,15 zu zwecks Abtrennung eines weiteren Stückes des Rohres 2', wird das Druckrad 25 wieder gegen die Spannzange 22 gepreßt, wodurch die Mitnahme des Rohres 2' und das gleichzeitige Anschieben des zuvor abgetrennten Rohrstückes aus dem in seine Ausgangslage zurückgekehrten Messer 15, das durch die Zylinder-Kolbenanordnungen 10,11 gesteuert wird, und Einschieben des Rohres in dieses Messer 15 gesichert ist. Selbstverständlich ist dabei die Zylinder-Kolbenanordnung 21 des Stützteiles 12 drucklos, um ein Zurückschieben der Hülse 17 zu ermöglichen.

Bei dem Einschieben des Rohres 2' in das Messer 15 gelangt die diesem zugekehrte Stirnfläche des Dornteiles 20' in die Trennebene der beiden Messer 14,15. Durch entsprechende Beaufschlagung der Zylinder-Kolbenanordnung 21 wird der Dorn 20 gegen das Messer 14 zu vorgeschoben und nimmt dabei die Hülse 17 mit.

Dadurch gelangt auch die freie Stirnfläche des Dornes 20 zum Anschlag an den Dornteil 20', wobei gleichzeitig die Hülse 17 gegen die Stirnseite des Rohres 2 gepreßt wird.

Das Weiterschieben bzw. das Einschieben des Rohres 2' in die Messer 14,15 zum Abtrennen eines weiteren Stückes und das Abtrennen desselben durch Verdrehen des das Messer 15 haltenden Stützteiles 12 ist ident mit dem Einschieben der Rohrstücke 2 in die Messer 14,15 bei der Einrichtung gemäß Fig. 1 bis 3.

Bei dieser werden die im Messer 15 nach dem Abtrennen eines Stückes in dem Messer verbleibenden abgetrennten Stücke durch ein weiteres Vorschieben der Rohrstücke 2 durch die Zylinder-Kolbenanordnung 6 ausgeschoben und das zu zerteilende Rohrstück 2 eingeschoben. Dabei muß das Messer 15 bzw. der Stützteil 2 nach dem Abtrennen des letzten Stückes wieder seine Ausgangslage eingenommen haben, in der die Bohrungen der beiden Messer 14,15 fluchten.

Grundsätzlich ist zu bemerken, daß der Stützteil 12 gegenüber dem Träger um einen solchen Winkelbetrag verdreht wird, der ausreicht, daß aufgrund der Versetzung der Drehachse des Stützteiles 12 gegenüber der Achse der Bohrung des Messers 14 eine gegenseitige Verschiebung der beiden Messer 14,15 um das Maß der Wandstärke des zu zerteilenden Rohres 2,2' erfolgt.

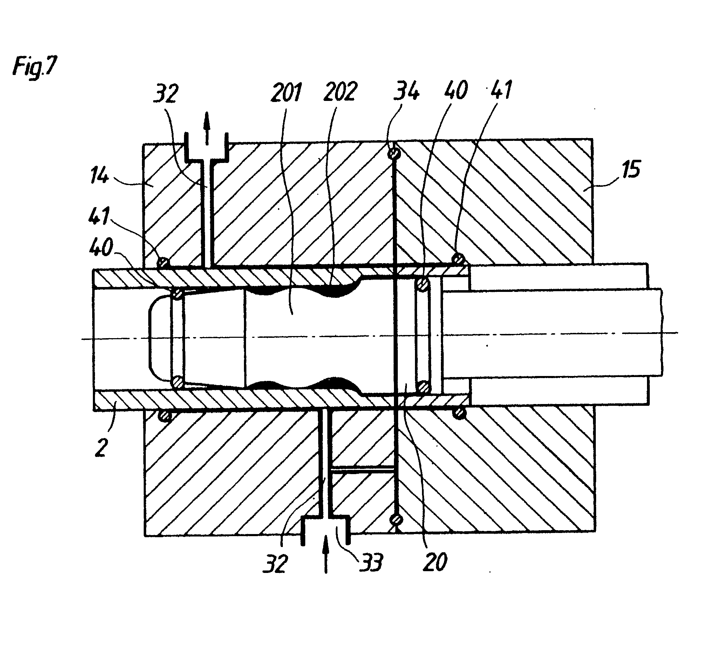

In Fig. 7 ist schematisch ein Detail der Anordnung der Messer 14,15 und des Dornes 20 dargestellt. Dabei weist der Teil 201, der im wesentlichen dem Teil 20' gemäß den Fig. 1 und 5 entspricht, im Bereich der Schnittebene, bzw. der Trennebene der beiden Messer 14,15 und der Teil 20 einen Durchmesser auf, der den Innendurchmesser des zu trennenden Rohres 2 übersteigt, sodaß dieses unter ausschließlicher Verminderung der Wandstärke aufgeweitet wird.

Weiters ist der den Auflaufbereich aufweisende Teil 201 des Dornes 20 Rillen 202 auf. Sowohl der Teil 201, wie auch der Teil 20 des Dornes sind mit je einem Dichtring 40 versehen, die sich gegen die Innenwand des zu trennenden Rohres 2 pressen und gegen diese abdichten. Dergleichen sind in den Messern 14,15 Dichtringe 41 in entsprechende Rillen eingelegt, die gegen die Außenwand des Rohres 2 abdichten.

In dem Messer 14 sind Ölkanäle 32 eingearbeitet über die vom Öleinlaß 33 her Drucköl zwischen die Außenwand des Rohres 2 und der Messer 14,15 sowie zwischen die aneinanderliegenden Flächen der Messer 14,15 gebracht wird, wobei in das Messer 14 eine einen Dichtring 34 aufnehmende Rille eingearbeitet ist.

Weiters gelangt Drucköl während der gegenseitigen Verschiebung der beiden Messer 14,15 während des Abtrennens eines Rohrstückes zwischen den Teilen des Dornes 20 und der Innenwand des Rohres 2. Das Öl wird zweckmäßiger Weise mit einem Druck von z.B. 400 bis 500 bar den Ölkanälen zugeführt, wobei, wie sich bei Messungen herausgestellt hat, zwischen den einander berührenden Flächen des Dornes 20 und des zu trennenden Rohres 2 bzw. den Messern 14, 15 und dem Rohr 2 im Ölfilm Drücke in der Größenordnung von ca. 20kbar entstehen. Auf diese Weise wird auch sichergestellt, daß das zu trennende Rohr im Bereich der Trennebene in radialer Richtung unter einer entsprechend hohen Spannung steht. In axialer Richtung wird das zu trennende Rohr 2 ebenso wie bei den Ausführungsformen gemäß Fig. 1 bis 6 unter einer entsprechend hohen Spannung gehalten, sodaß das zu trennende Rohr 2 im Bereich der Trennebene allseitig unter einer Spannung steht, die im Bereich der Fließgrenze des Materials des Rohres 2 liegt.

Außerdem wird durch den sich ausbildenden Ölfilm die Reibung entsprechend vermindert. Um die Verschleißfestigkeit des Dornes 20 und der Messer zu verbessern, können diese zweckmäßigerweise mit Titannitrid beschichtet und gegebenenfalls auf spiegelnden Metallglanz poliert werden, wodurch sich ein sehr geringer Reibungskoeffizient, eine große Härte der Oberfläche und eine ausgezeichnete Benetzbarkeit mit Öl ergibt. Außerdem wird durch eine solche Beschichtung die Gefahr des Festfressens und der Kaltverschweißung der Teile weitgehend ausgeschaltet.

**Ansprüche**

1. Einrichtung zum Abtrennen von Rohrstücken mit geschlossenen, das Rohr umgebenden Messern und einem Anschlag, wobei mindestens ein Messer um eine vom Mittelpunkt seines Durchbruchs in der Schnittebene distanzierten Drehachse gegenüber dem zweiten Messer verdrehbar ist und die Messer plan aneinander anliegen und in der Halterung des einen Messers ein mittels eines Antriebes, vorzugsweise einer Zylinder-Kolbenanordnung axial zu den Messern verschiebbarer Dorn geführt ist, dessen Querschnitt mit dem lichten Querschnitt des zu schneidenden Rohres einen Preßsitz ergibt, wobei der Dorn geteilt ist und die Teilungsebene seiner beiden stumpf aneinander anliegenden Teile im eingeschobenen Zustand in der Schnittebene der beiden Messer liegt, dadurch gekennzeichnet, daß beide Messer (14,15) einen Innendurchmesser aufweisen, der mit dem Durchmesser des zu schneidenden Rohres einen Preßsitz ergibt, und daß die einander zugekehrten Stirnseiten der beiden Teile (20,20') des Dornes scharfkantig in deren Mantelfläche übergehen und in diesem Übergangsbereich einen Querschnitt aufweisen, der mit dem lichten Querschnitt des zu trennenden Rohres einen strengen Preßsitz ergibt und eine eine erhebliche Druckkraft während der gegenseitigen Bewegung der Messer (14,15) aufbringende, vorzugsweise mit einer Zylinder-Kolbenanordnung (6) versehene Vorschubeinrichtung vorgesehen ist.

2. Einrichtung zum Abtrennen von Rohrstücken mit geschlossenen, das Rohr umgebenden Messern und einem Anschlag, wobei mindestens ein Messer um eine vom Mittelpunkt seines Durchbruchs in der Schnittebene distanzierten Drehachse gegenüber dem zweiten Messer verdrehbar ist und die Messer plan aneinander anliegen und in der Halterung des einen Messers ein mittels eines Antriebes, vorzugsweise einer Zylinder-Kolbenanordnung axial zu den Messern verschiebarer Dorn geführt ist, dessen Querschnitt mit dem lichten Querschnitt des zu schneidenden Rohres einen Preßsitz ergibt,wobei der Dorn geteilt ist und die Teilungsebene seiner beiden stumpf aneinander anliegenden Teile im eingeschobenen Zustand in der Schnittebene der beiden Meser liegt, dadurch gekennzeichnet, daß die einander zugekehrten Stirnseiten der beiden Teile (201, 20) des Dornes scharfkantig in deren Mantelfläche übergehen und in diesem Übergangsbereich einen Durchmesser aufweisen, der den lichten Querschnitt des zu trennenden Rohres übersteigt und eine eine erhebliche Druckkraft während der gegenseitigen Bewegung der Messer (14,15) aufbringende, vorzugsweise mit einer Zylinder-Kolbenanordnung (6) versehene Vorschubeinrichtung vorgesehen ist, wobei in den das Rohr (2) umschließenden Zylinderflächen der Messer (14,15), in den Mantelflächen der beiden Teile (201,20) des Dornes sowie in einer der beiden einander zugekehrten Stirnflächen der beiden Messer (14,15) Abdichtungen (40,41,34) angeordnet sind und in einem der Messer (14) ein mit Drucköl beaufschlagbarer Ölkanal (32) angeordnet ist, der zum Inneren des Messer zu offen ist und eine zu der dem zweiten Messer (15) zugekehrten Stirnfläche hin offene Abzweigung aufweist.

3. Einrichtung nach Anspruch 1 oder 2, dadurch gekennzeichnet, daß die das eine von der Vorschubeinrichtung für das zu trennende Rohr abgekehrte Messer (15) und den Dorn (20) aufnehmende Halterung an einem exzentrisch zur Bohrung des zweiten Messers (14) angeordneten Zapfen (8) drehbar gelagert und mittels eines Antriebes gegenüber diesem verdrehbar ist.

4. Einrichtung nach Anspruch 1 bis 3, dadurch gekennzeichnet, daß der geteilte Dorn (20) eine Hülse (17) durchsetzt, die auf diesem Dorn (20) verschiebbar ist und deren eine Stirnseite den Anschlag für das zu trennende Rohr (2,2') bildet und die eine an einem Anschlag (19) des Dornes (20) zur Anlage bringbare Schulter aufweist, die bei einer Bewegung des Dornes (20) zum Messer (15) hin zur Anlage an dem Anschlag (19) kommt.

5. Einrichtung nach einem der Ansprüche 1 bis 4, dadurch gekennzeichnet, daß die Vorschubeinrichtung für das zu trennende Rohr (2,2') eine mit der hohl ausgebildeten Kolbenstangeder Zylinder-Kolbenanordnung (6) gekuppelte Spannzange (22) aufweist, die zwischen zwei Druckrädern (24,25) angeordnet ist, von denen vorzugsweise eines mit einer umlaufenden Rille (30) versehen ist und die um zwei zueinander parallel verlaufende, die Spannzange (22) senkrecht kreuzende Achsen (26,28) drehbar sind und von denen mindestens eine senkrecht zur Spannzange (22) bewegbar ist.

6. Einrichtung nach einem der Ansprüche 1 bis 4, dadurch gekennzeichnet, daß die Vorschubeinrichtung für zu unterteilende Rohrstücke eine hohlzylindrische Führung (5) aufweist, die eine sich über einen Teil ihrer Länge erstreckende nach oben zu offene Ausnehmung aufweist und bei der die unterste Erzeugende ihrer Innenwand mit der untersten Erzeugenden der Bohrungen der Messer (14,15) übereinstimmt und in die ein von einer Zylinder-Kolbenanordnung (6) betätigter Stempel hineinragt.

**Claims**

1. Device for cutting pipe sections with closed blades encompassing the pipe and comprising a stop, whereby at least one blade is rotatable about a rotation axis relative to the second blade, said axis being distanced from the centre of the break-through of said first blade in the cutting plane, and that said blades are disposed adjacently to one another in a plane and that in the holding device of said one blade a mandrel is guided by means of a drive, said drive preferably being a cylinder-piston arrangement, for being axially movable to said blades, whereby the cross section of said mandrel results in a press fit with the inner cross section of the pipe to be cut, and that, said mandrel is divided and the plane of separation of its two butt-joined components lies, in the inserted condition, in the cutting plane of said two blades, characterized in that both blades (14, 15) comprise an inner diameter, said diameter resulting in a press fit with the diameter of the pipe to be cut, and that the front sides of the two said components (20, 20') of said mandrel change into the jacket surface with sharp edges and comprise, within such area of transition, a cross section which results in a tight press fit with the inside cross section of the pipe to be cut, and that an advancing device, preferably with a piston-cylinder arrangement (6), is provided for applying a high force of pressure during the relative motion of said blades (14, 15).

2. Device for cutting pipe sections with closed blades encompassing the pipe and comprising a stop, whereby at least one blade is rotatable about a rotation axis versus the second blade, said axis being distanced from the centre of the break-through of said first blade in the cutting plane, and that said blades are disposed adjacently to one another in a plane and that in the holding device of said one blade a mandrel is guided by means of a drive, said drive preferably being a cylinder-piston arrangement, for being axially movable to said blades, whereby the cross section of said mandrel results in a press fit with the inner cross section of the pipe to be cut, and that said mandrel is divided and the plane of separation of its two butt-joined components lies, in the inserted condition, in the cutting plane of said two blades, characterized in that the facing front sides of the two components (201, 20) of said mandrel change into its jacket surface with sharp edges and comprise, in such area of transition, a diameter which exceeds the inner cross section of the pipe to be cut, and that an advancing device is provided for exerting a substantial force of pressure during the relative motion of the blades (14, 15), said device preferably having a cylinder-piston arrangement (6), whereby gaskets (40, 41, 34) are provided in the cylinder areas of the blades (14, 15), in the jacket surface of the two said components (201, 20) of said mandrel, as well as in the facing front sides of the two blades (14, 15), and that in one of the blades (14) an oil duct (32) to be fed with pressure oil is arranged, said duct being open towards the interior section of the blade and comprising an open branch to the front side facing said second blade (15).

3. Device in accordance with claim 1 or 2, characterized in that the holding device for holding both the blade (15) averted from the advancing device for the pipe to be cut and the mandrel (20) is rotatably supported in a journal 8, said journal being arranged eccentrically relative to the bore of the second blade (14), and rotatable relative to said blade by means of a drive.

4. Device in accordance with claims 1 to 3, characterized in that the divided mandrel (20) penetrates a sleeve (17) which is slidably held on said mandrel, whereby the one front side of said sleeve forms the stop means for the pipe (2, 2') to be cut, said front side having a shoulder which can be brought to rest against a stop means (19) of the mandrel (20), whereby said shoulder comes to rest on said stop means (19) when said mandrel (20) is moving towards said blade (15).

5. Device in accordance with one of the claims 1 to 4, characterized in that the advancing device for the pipe (2,2') to be cut comprises a clamping pincers (22) coupled with the hollow piston rod of the cylinder-piston arrangement (6), said clamping pincers (22) being arranged between two pressure wheels (24, 25), of which preferably one wheel is provided with a groove (30) extending around said wheel and that said pressure wheels are rotatable around two axles (26, 28) extending parallel to each other and vertically intersecting said clamping pincers (22), of which axles at least one is vertically movable to said clamping pincers (22).

6. Device in accordance with one of the claims 1 to 4, characterized in that the advancing device for the pipe sections to be subdivided comprises a hollow, cylindrical guiding means (5) having a recess extending across part of its length and being open at the top and that its lowermost generatrix of the interior wall of said guide means conforms with the lowermost generatrix of the bores of said blades (14, 15), whereby a punch actuated by a cylinder-piston arrangement (6) projects into said guiding means.

**Revendications**

1. Dispositif destiné à séparer des segments de tubes comportant des couteaux fermés, entourant le tube, et une butée, au moins un couteau pouvant tourner par rapport au deuxième couteau autour d'un axe de rotation situé à distance du centre de son intersection avec le plan de coupe et les couteaux reposant à plat l'un sur l'autre, et une broche mobile axialement par rapport aux couteaux au moyen d'un entraînement, de préférence un dispositif à cylindre et piston étant guidé dans le support de l'un des couteaux, la section transversale de cette broche constituant avec la coupe transversale libre du tube à couper un siège de serrage, la broche étant divisée et le plan de division de ces deux parties situées bout-à-bout l'une par rapport à l'autre étant situé, dans l'état enfoncé, dans le plan de coupe des deux couteaux, caractérisé en ce que les deux couteaux (14, 15) présentent un diamètre intérieur qui constitue avec le diamètre du tube à découper un siège de serrage, et en ce que les faces frontales tournées l'une vers l'autre des deux parties (20, 20') de la broche se raccordent par des arêtes aiguës dans leur surface d'enveloppe de ces dernières, et présentent, dans cette zone de raccordement, une coupe transversale qui constitue avec la coupe transversale libre du tube à découper un siège de serrage robuste, et qu'il est prévu un dispositif d'avance appliquant, de préférence à l'aide d'un dispositif (6) à cylindre et piston. une force de compression considérable pendant le déplacement relatif des couteaux (14, 15)

2. Dispositif destiné à séparer des segments de tubes comportant des couteaux fermés, entourant le tube, et une butée, au moins un couteau pouvant tourner par rapport au deuxième couteau autour d'un axe de rotation situé à distance du centre de son intersection avec le plan de coupe et les couteaux reposant à plat l'un sur l'autre, et une broche mobile axialement par rapport aux couteaux au moyen d'un entraînement, de préférence un dispositif à cylindre et piston étant guidé dans le support de l'un des couteaux, la section transversale de cette broche constituant avec la coupe transversale libre du tube à couper un siège de serrage, la broche étant divisée et le plan de division de ces deux parties situées bout-à-bout l'une par rapport à l'autre étant situé, dans l'état enfoncé, dans le plan de coupe des deux couteaux, caractérisé en ce que les faces frontales tournées l'une vers l'autre des deux parties (201, 20) de la broche se raccordent avec des arêtes aiguës dans leur surface d'enveloppe et présentent, dans cette zone de raccordement, un diamètre qui dépasse la coupe transversale libre du tube à séparer et en ce qu'il est prévu un dispositif d'avance appliquant une force de compression considérable pendant le déplacement relatif des couteaux (14, 15), de préférence un dispositif (6) à cylindre et piston, des joints (40, 41, 34) étant disposés dans les surfaces cylindriques des couteaux (14, 15) entourant le tube (2), dans les surfaces enveloppes des deux parties (201, 20) de la broche ainsi que dans l'une des faces frontales des deux couteaux (14, 15) tournées l'une vers l'autre, et l'un des couteaux (14) comportant un canal d'huile (32), auquel peut être appliquée de l'huile sous pression, qui est ouvert vers l'intérieur du couteau, et comprend un ramification ouverte vers la face frontale tournée vers le deuxième couteau (15).

3. Dispositif selon la revendication 1 ou 2, caractérisé en ce que le support qui reçoit le couteau (15) opposé à la direction de déplacement du tube à séparer ainsi que la broche (20) est logé à rotation sur un tenon (8) disposé de façon excentrique par rapport à l'alésage du deuxième couteau (14) et peut tourner par rapport à ce dernier au moyen d'un entraînement.

4. Dispositif selon l'une des revendications 1 à 3, caractérisé en ce que la broche divisée (20) traverse une douille (17) qui est mobile sur cette broche (20) et dont une face frontale constitue la butée pour le tube à séparer (2, 2') et qui présente un épaulement qui peut être amené en appui sur une butée (19) de la broche (20), cet épaulement venant en appui sur la butée (19) lors d'un déplacement de la broche (20) par rapport au couteau (15).

5. Dispositif selon l'une des revendications 1 à 4, caractérisé en ce que le dispositif d'avance du tube (2, 2') à séparer, comporte une pince de serrage (22) couplée avec la tige de piston de structure creuse du dispositif (6) de cylindre et piston, cette pince étant disposée entre deux roues de pression (24, 25) dont l'une comporte de préférence une rainure périphérique (30) et qui peuvent tourner autour de deux axes (26, 28) parallèles entre eux, croisant selon des angles droits la pince de serrage (22) et dont l'une au moins peut être déplacée perpendiculairement à la pince de serrage (22).

6. Dispositif selon l'une des revendications 1 à 4, caractérisé en ce que le dispositif d'avance présente, pour les tubes à séparer, un guidage (5), en cylindre creux, qui présente un évidement s'étendant sur une partie de sa longueur, ouvert vers le haut, et dans lequel la génératrice inférieure de sa paroi intérieure coïncide avec la génératrice inférieure de l'alésage des couteaux (14, 15) et dans lequel fait saillie un poinçon actionné par le dispositif (6) à cylindre et piston.

Fig.1

Fig.2

Fig.4

**Fig.3**

Fig.5

Fig.6

29

30

27

25

31

22

23

24

31

3

Fig.7